# EUROPEAN PATENT SPECIFICATION

(11) **EP 3 569 912 B1**
(45) Date of publication and mention of the grant of the patent: **06.09.2023**
(21) Application number: 18425034.8
(22) Date of filing: 14.05.2018
(51) Int. Cl.: F16L 37/56, F16L 39/00, F16L 41/00, E02F 9/22, E02F 3/36

(54) **SUPPORTING SYSTEM FOR QUICK COUPLINGS, PARTICULARLY FOR FLAT FACE CARTRIDGES COUPLINGS**
TRAGSYSTEM FÜR SCHNELLKUPPLUNGEN, INSBESONDERE FÜR FLACHKOPFPATRONENKUPPLUNGEN
SYSTÈME DE SUPPORT POUR RACCORDS RAPIDES, EN PARTICULIER POUR DES RACCORDS DE CARTOUCHES À FACE PLATE

(43) Date of publication of application: 20.11.2019
(73) Proprietor: Faster S.R.L., 26027 Rivolta d'Adda (IT)
(72) Inventor: Foletti, Federico, 26027 Rivolta d'Adda (CR) (IT); Polgati, Igor, 26027 Rivolta d'Adda (CR) (IT); Rusconi, Paolo, 26027 Rivolta d'Adda (CR) (IT)
(74) Representative: Lualdi, Lorenzo

(56) References cited:
- US-A1- 2005 184 510
- US-A1- 2009 090 415
- US-A1- 2010 092 233

## Description

The present invention relates to an improved supporting system for quick couplings, in particular for flat face cartridge couplings in the hydraulic system of operating machines.

More in detail, the invention relates to a modular and highly versatile system adaptable to different configurations of use, in particular, but not exclusively, for the use of flat face cartridge couplings for connecting a utility to a hydraulic system of operating machines such as, for example, but not limited to, earth-moving machines or the like. Hereinafter, the supporting system according to the invention will be described in detail with reference to its use to flat face cartridge couplings, but it is apparent that the same system can be used to support other devices, according to the needs.

As is known, in hydraulic systems for operating machines, such as, for example, excavators and earth moving machines in general, the support of cartridge couplings occurs inside cast iron castings. All the various fittings and connections are implemented in the casting body.

It is immediately clear that this supporting system of cartridge couplings has constraints due to the dimensions and position of the lines.

Moreover, the same solution of the prior art implies very high production costs, due in particular to the creation of the casting mould and to mechanical machining, which is difficult and expensive in terms of cost and production times.

Another drawback of the known solutions consists in the very long procurement times, due in particular to difficult production technologies.

US 2009/090415 A1 discloses a supporting system comprising a bracket provided with at least one seat configured as a hole extending through the bracket and at least one body comprising two diametrically opposed threaded holes and having an end to be inserted in said seat.

In light of the foregoing, the solution according to the present invention is proposed, which consists of a supporting system in which the devices, in particular, as said, the flat face cartridge couplings, are inserted into a turned body, and therefore rapidly manufactured, supported by a bracket, preferably made of steel.

In particular, through the use of the bracket, the advantage is obtained that one has the complete freedom to install the desired number of lines (with the only constraint of the available space), it being possible to modify the arrangement also during use (for example by changing the size of the couplings, or replacing a power line with a drain line, or by removing or adding one or more lines).

Another advantage of the solution proposed according to the present invention consists in allowing the lines to be coupled with residual pressure both on the machine side and on the equipment side, without having to use decompression systems of the machine hydraulic system, as the decompression of the oil on the machine side occurs during the coupling due to the configuration of the cartridge itself, which provides a decompression system as described for example in patent EP2378177, by the same Applicant, and the decompressed oil flows through a line that returns it to the tank or passes into a dedicated drain line placed in parallel (with dedicated coupling) through a floating pipe system, and the equipment can thus be coupled after the decompression has taken place.

If, on the other hand, the equipment is not subjected to residual pressure, it will be possible to use a single-valve flat face coupling in the system according to the present invention.

If the equipment is subject to an increase in residual pressure, due for example to an increase in ambient temperature, a coupling can be used which provides for a pressure elimination system during the connection (for example, series 3 of the same Applicant).

A specific object of the present invention therefore is a supporting system as claimed in claim 1.

Preferred aspects of the invention are detailed in the dependent claims.

The present invention will now be described, by way of a non-limiting example, with particular reference to the figures in the accompanying drawings, in which:
figure 1 is a view of the supporting system according to the invention, disassembled;
figure 2 is a perspective view of the supporting system of figure 1 assembled with a cartridge coupling inserted;
figure 3 is a first side view of the supporting system of figure 1;
figure 4 is a side lateral view of the supporting system of figure 1;
figure 5a is a partially sectional view of the supporting system of figure 1, assembled;
figure 5b is a sectional view of a detail of figure 5a;
figure 6 is a perspective view of a first exemplary application of the supporting system according to the invention;
figure 7 is a perspective view of a second exemplary application of the supporting system according to the invention, in such a figure, B is the return line;
figure 8 is a perspective view of a third exemplary application of the supporting system according to the invention; in figure 8, line B is the return line, line C is the drainage line, for the recovery of the oil drained during decompression;
figure 9 is a perspective view of a fourth exemplary application of the supporting system according to the invention;
figure 10 is a perspective view of a fifth exemplary application of the supporting system according to the invention;
figure 11 is a perspective view of a sixth exemplary application of the supporting system according to the invention.

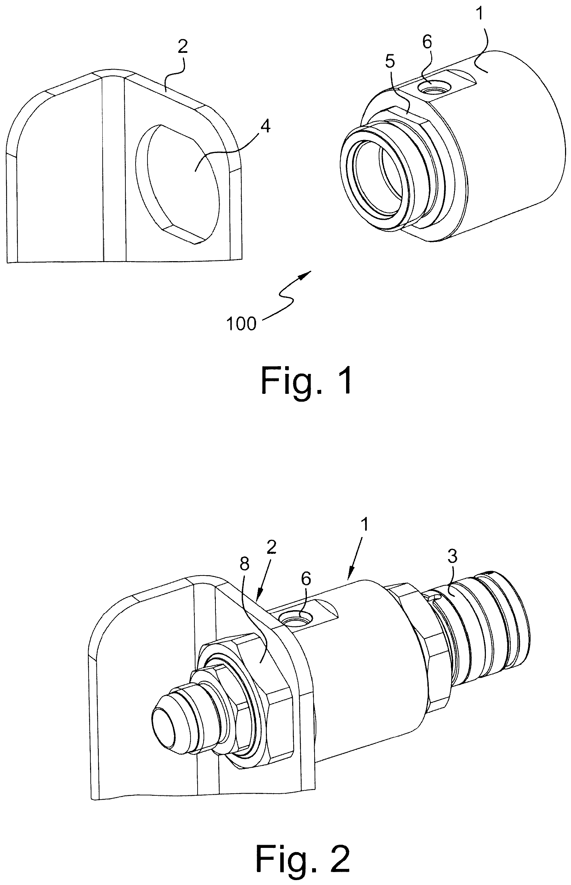

Looking first at figures 1 to 5 of the accompanying drawings, a supporting system according to the invention is shown, indicated generically with reference numeral **100** in the various figures, consisting, in its simplest form, of a turned body **1** and a bracket **2**.

The turned body **1** receives the cartridge **3**, which in the figure is represented as a flat face cartridge coupling, but which could also be of a different type. As can be seen in the accompanying figures, the bracket **2** may comprise, according to the requirements and the application, one or more seats **4** to receive a corresponding number of bodies **1**. Each seat **4** of the bracket **2** is made with a shaping configured to receive a corresponding counter-shaping obtained on the part of the body **1** arranged to fit into the seat **4** itself, so as to have a fixed orientation of the body **1** with respect to the seat **4**, a feature that, as will be seen hereinafter, is absolutely necessary for the correct operation of the invention.

In particular, the hole of the seat **4** is shaped in a manner corresponding to a respective abutment surface **5** of the body **1**, whereby, when they are coupled, the body **1** can no longer rotate with respect to the bracket **2**.

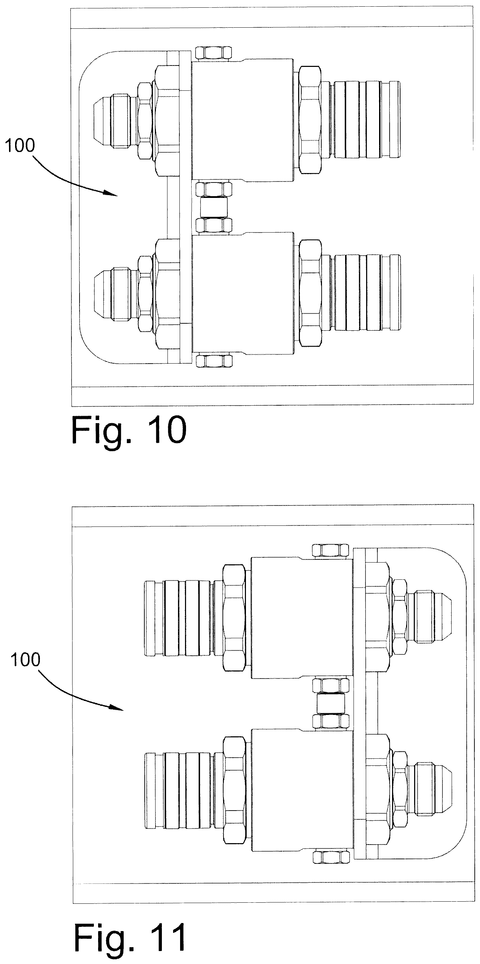

As can be seen in figure 2, the fixing of the body **1** (and consequently of the cartridge **3**) to the bracket **2** is accomplished by tightening a nut **8**. The shaping of the slot **4** and of the abutment **5** allows obtaining a correct relative position, and avoiding the rotation of the body **1** both during assembly and during the work. Preferably, the bracket **2** is symmetrically shaped so that it is possible to mount the cartridges in any position, as shown for example in figures 10 and 11 and can be conveniently installed on the machine arm by means of special fixing slots in which to insert commercially available bolts.

As can be seen in the accompanying figures, the body **1** has two diametrically opposed holes **6, 7** threaded and oriented with respect to the shaping of the abutment surface **5** of the body **1** such that, with the body **1** coupled to the bracket **2**, the axis of said holes is parallel to the development of the bracket **2**. Once the body **1** is coupled to the bracket **2** as described in the foregoing, the orientation of the holes **6**, **7** will remain fixed, with their axis arranged substantially parallel to the direction of development of the bracket **2**, vertical according to the orientation shown in the accompanying figures, precisely by virtue of the shaping of the seat **4** and of the shoulder **5**.

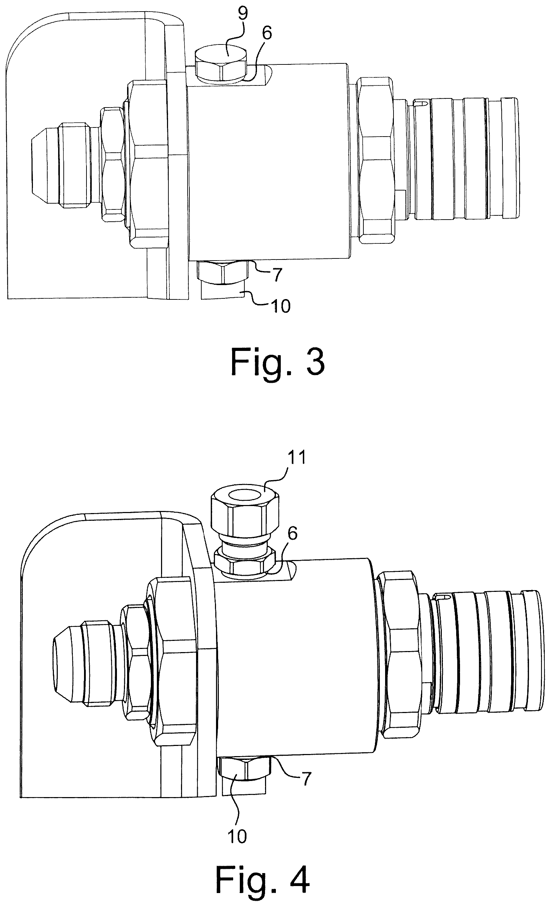

The threaded holes **6**, **7** are obtained to receive, according to the solution provided, a plug **9** (figure 3) or a specially designed adapter **12** which will mate with the drainage tube **10** (figures 3 and 4) necessary to connect the lines of the cartridges **3** mounted on the various bodies **1** adjacent to the bracket, or a fitting **11** (figure 4), suitable for connecting the system with other areas of the system.

In particular, the plug **9** is preferably a threaded turned plug, which has a seat for an O-ring, so as to guarantee the hydraulic seal.

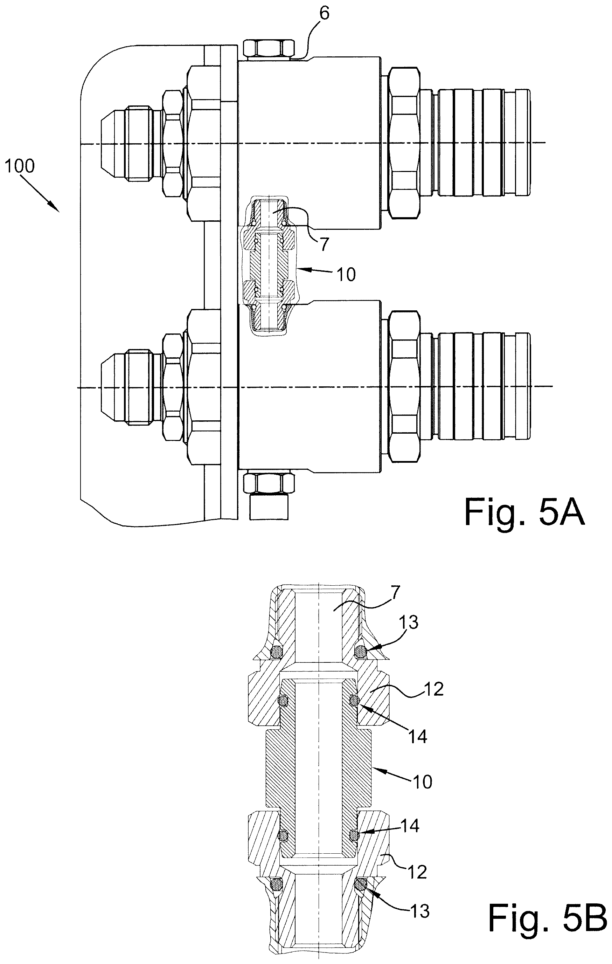

Looking now in particular at figures 5a and 5b of the accompanying drawings, the drainage tube **10**, or connecting floating tube, comprises two turned and threaded adapters **12** screwed into the threaded holes **6**, **7** formed in the turned body **1**. Also in this case, an O-ring **13** placed between the adapter and the body **1** is used to guarantee the seal. A turned tube **10** is used to allow the passage of oil from one line to another. The flotation capacity of the tube **10**, with a clearance G, serves to be able to adapt to possible variations in the positioning of the seats **4** made on the bracket **2**. A further O-ring **14** is provided to ensure the seal between the tube **10** and the adapter **12**, even in the presence of axial clearance.

The fitting **11**, on the other hand, is a fitting available from various suppliers, whose sole constraint is that of having a thread that mates with that of the threaded holes **6**, **7** of the turned body **1**. The fitting **11** will provide an O-ring or a metal seal based on the choice of the manufacturer of the operating machine.

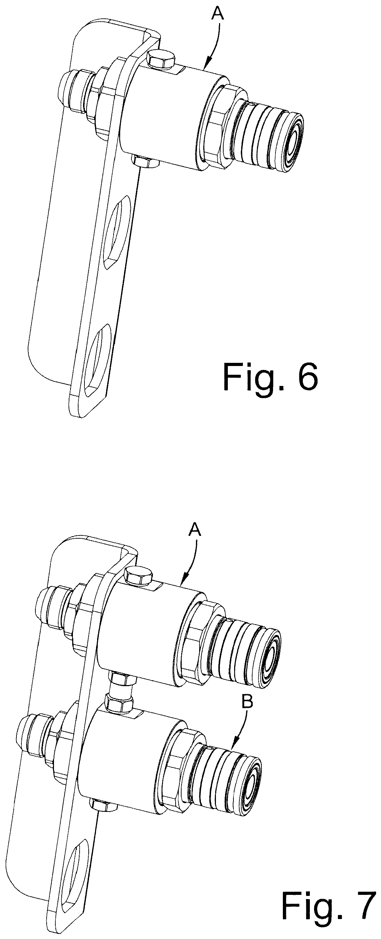

In the remaining figures 6 - 11 different embodiments of the supporting system according to the invention are shown, to highlight its modularity, versatility and ease of adaptation.

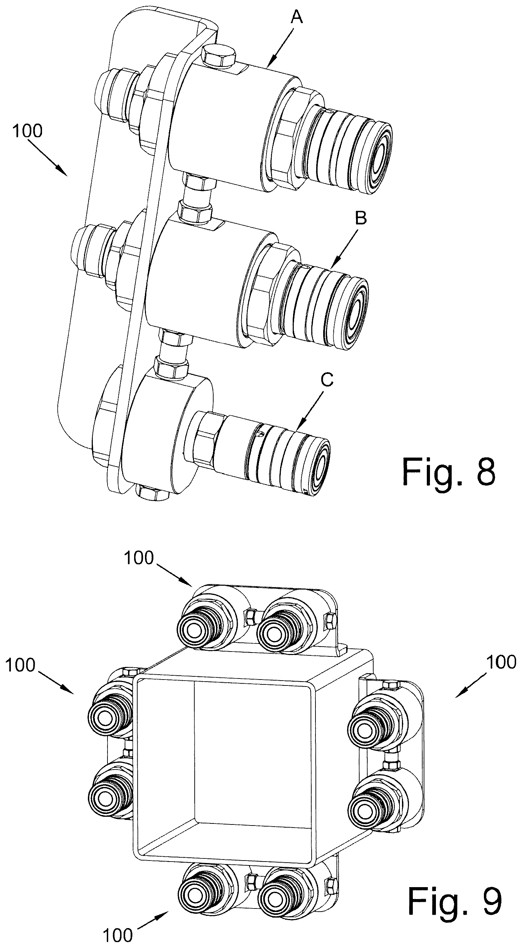

For example, figure 6 shows the use for a single power line, figure 7 for a power line **A** and a return line **B**, and figure 8 for a power line **A**, a return line **B** and, below, a drainage line **C**.

Figure 9 shows a very particular embodiment, which provides for eight bodies **1**, a respective cartridge **3** being inserted in each body.

Finally, figures 10 and 11 show applications with female cartridges with assembly in opposite directions while using the same bracket and the same components of the modular system described thus far.

With the solution illustrated above, a maximum modularity is obtained, as the shape and number of seats **4** in the brackets **2** can be modified as desired. Another advantage of the present invention lies in the versatility of the system, in particular in relation to the positioning, since it is possible to mount the system on any side and in any position.

Moreover, with the solution according to the invention the advantage of interchangeability is obtained, since it is possible to replace one cartridge with another even when the system is already assembled, it is also possible to choose whether to install cartridges of male or female type and of different "sizes", or diameters.

Disassembly and reassembly are also extremely easy, since it is possible to change the position of a power or drain line in an extremely easy way.

The solution proposed and described is particularly intuitive in the assembly, as is its maintenance.

Furthermore, the solution of the steel bracket is much less heavy than the cast iron solution and due to the possibility of being obtained with a laser cutting process, it does not require any investment in the mould.

The present invention has been described, for illustrative and non-limiting purposes, according to preferred embodiments thereof, but it is to be understood that variants and/or modifications may be made by a person skilled in the art without thereby departing from the relative scope of protection, as defined in the appended claims.

## Claims

1. Supporting system (100) for flat face cartridge quick couplings (3), for connecting a utility to the hydraulic system of operating machines, said system comprising a bracket (2), provided with at least one seat (4) configured as a passing hole extending through said bracket (2), and at least one body (1) having an end thereof comprising an abutment surface (5),
wherein said end can be inserted in said at least one seat (4) of said bracket (2) and the other end of said at least one body (1) is configured to accommodate said flat face cartridge quick couplings (3),
said at least one body (1) further comprising two threaded holes (6, 7) diametrically opposed,
**characterised in that** said at least one seat (4) is shaped in a manner corresponding to said abutment surface (5),
such that said seat (4) and said abutment surface (5) provide means (4, 5) for the fixed orientation of the body (1) in the respective seat (4) so that, when the end of said body (1) is inserted in said seat (4),
said body (1) can no longer rotate with respect to said bracket (2).

2. System (100) according to claim 1, **characterised in that** said body (1) is substantially cylindrical and provided with an axial seat for accommodating said flat face cartridge quick couplings (3).

3. System (100) according to one or more of the previous claims, **characterised in that** said diametrically opposed threaded holes (6, 7) are arranged radially on said body (1).

4. System (100) according to one or more of the preceding claims, **characterised in that** said bracket (4) is made of steel obtained by a laser cutting process, and said body (1) is a turned body.

5. System (100) according to one of the preceding claims, **characterised in that** the fixing between the body (1) and bracket (2) is made by means of a nut (8).

6. System (100) according to one or more of the preceding claims, **characterised in that** it comprises a plurality of bodies (1) associated with said bracket (2) .

7. System (100) according to one or more of the preceding claims, **characterised in that** in said threaded holes (6, 7) a plug (9) and/or a drainage tube (10) are coupled to connect the hydraulic lines of the flat face cartridge quick couplings (3) mounted on said bodies (1), and/or a fitting (11) suitable for connecting the system (100) with other areas of the system on board the machine to which said hydraulic lines are connected.

8. System (100) according to the preceding claim, **characterised in that** said plug (9) is a threaded turned plug.

9. System (100) according to claim 7 or 8, **characterised in that** said drainage tube (10) includes two turned and threaded adapters (12) and the supporting system (100) comprises two bodies (1), each threaded adapter being screwed into one of said threaded holes (6, 7) made on a respective body (1).

10. System (100) according to one or more of the preceding claims, **characterised in that** said bracket (2) comprises a plurality of seats (4) configured to each receive a body (1), said seats being aligned according to a direction of development of the bracket.

## Patentansprüche

1. Trägersystem (100) für Flat-Face-Kartusche-Schnellkupplungen (3) zum Verbinden eines Verbrauchers mit dem hydraulischen System von Arbeitsmaschinen, wobei das System eine Halterung (2), die mit mindestens einem Sitz (4) versehen ist, der als ein sich durch die Halterung (2) erstreckendes Durchgangsloch konfiguriert ist, und mindestens einen Körper (1) umfasst, aufweisend ein Ende davon, das eine Anschlagfläche (5) umfasst,
wobei das Ende in den mindestens einen Sitz (4) der Halterung (2) eingeführt werden kann und das andere Ende des mindestens einen Körpers (1) so konfiguriert ist, dass es
die Flat-Face-Kartusche-Schnellkupplungen (3) aufnimmt, wobei der mindestens eine Körper (1) ferner zwei diametral gegenüberliegende Gewindelöcher (6, 7) umfasst,
**dadurch gekennzeichnet, dass**
der mindestens eine Sitz (4) auf eine Weise geformt ist, die der Anlagefläche (5) entspricht, so dass der Sitz (4) und die Anlagefläche (5) Mittel (4, 5) für die feste Ausrichtung des Körpers (1) in dem jeweiligen Sitz (4) bereitstellen, so dass, wenn das Ende des Körpers (1) in den Sitz (4) eingeführt wird,
der Körper (1) sich nicht mehr in Bezug auf die Halterung (2) drehen kann.

2. System (100) nach Anspruch 1, **dadurch gekennzeichnet, dass** der Körper (1) im Wesentlichen zylindrisch ist und mit einem axialen Sitz zur Aufnahme der Flat-Face-Kartusche-Schnellkupplungen (3) versehen ist.

3. System (100) nach einem oder mehreren der vorhergehenden Ansprüche, **dadurch gekennzeichnet, dass** die diametral gegenüberliegenden Gewindelöcher (6, 7) radial an dem Körper (1) angeordnet sind.

4. System (100) nach einem oder mehreren der vorhergehenden Ansprüche, **dadurch gekennzeichnet, dass** die Halterung (4) aus Stahl besteht, die durch ein Laserschneidverfahren erhalten wird, und der Körper (1) ein gedrehter Körper ist.

5. System (100) nach einem der vorhergehenden Ansprüche, **dadurch gekennzeichnet, dass** die Befestigung zwischen Körper (1) und Halterung (2) mittels einer Mutter (8) erfolgt.

6. System (100) nach einem oder mehreren der vorhergehenden Ansprüche, **dadurch gekennzeichnet, dass** es eine Vielzahl von Körpern (1) umfasst, die mit der Halterung (2) assoziiert sind.

7. System (100) nach einem oder mehreren der vorhergehenden Ansprüche, **dadurch gekennzeichnet, dass** in den Gewindelöchern (6, 7) ein Stopfen (9) und/oder ein Drainagerohr (10) zum Verbinden der Hydraulikleitungen der an den Körpern (1) montierten Flat-Face-Kartusche-Schnellkupplungen (3) und/oder ein Anschlussstück (11), geeignet zum Verbinden des Systems (100) mit anderen Bereichen des Systems an Bord der Maschine, mit denen die Hydraulikleitungen verbunden sind, eingekoppelt sind.

8. System (100) nach dem vorhergehenden Anspruch, **dadurch gekennzeichnet, dass** der Stopfen (9) ein gedrehter Gewindestopfen ist.

9. System (100) nach Anspruch 7 oder 8, **dadurch gekennzeichnet, dass** das Drainagerohr (10) zwei gedrehte Gewindeadapter (12) einschließt und das Trägersystem (100) zwei Körper (1) umfasst, wobei jeder Gewindeadapter in eines der Gewindelöcher (6, 7) eingeschraubt ist, die an einem jeweiligen Körper (1) ausgebildet sind.

10. System (100) nach einem oder mehreren der vorhergehenden Ansprüche, **dadurch gekennzeichnet, dass** die Halterung (2) eine Vielzahl von Sitzen (4) umfasst, die konfiguriert sind, um jeweils einen Körper (1) aufzunehmen, wobei die Sitze gemäß einer Ausdehnungsrichtung der Halterung ausgerichtet sind.

## Revendications

1. Système de support (100) pour raccords rapides à cartouche à face plate (3), pour connecter un utilitaire au système hydraulique de machines d'exploitation, ledit système comprenant un support (2), pourvu d'au moins un siège (4) configuré comme un trou traversant s'étendant à travers ledit support (2), et au moins un corps (1) dont une extrémité comprend une surface de butée (5),
dans lequel ladite extrémité peut être insérée dans ledit au moins un siège (4) dudit support (2) et l'autre extrémité dudit au moins un corps (1) est configurée pour accueillir
lesdits raccords rapides à cartouche à face plate (3), ledit au moins un corps (1) comprenant en outre deux trous filetés (6, 7) diamétralement opposés,
**caractérisé en ce que**
ledit au moins un siège (4) est formé d'une manière correspondant à ladite surface de butée (5), de sorte que ledit siège (4) et ladite surface de butée (5) fournissent des moyens (4, 5) pour l'orientation fixe du corps (1) dans le siège respectif (4) de sorte que, lorsque l'extrémité dudit corps (1) est insérée dans ledit siège (4),
ledit corps (1) ne peut plus tourner par rapport audit support (2).

2. Système (100) selon la revendication 1, **caractérisé en ce que** ledit corps (1) est sensiblement cylindrique et pourvu d'un siège axial pour loger lesdits raccords rapides à cartouche à face plate (3).

3. Système (100) selon une ou plusieurs des revendications précédentes, **caractérisé en ce que** lesdits trous filetés diamétralement opposés (6, 7) sont disposés radialement sur ledit corps (1).

4. Système (100) selon une ou plusieurs des revendications précédentes, **caractérisé en ce que** ledit support (4) est en acier obtenu par un procédé de découpe au laser, et ledit corps (1) est un corps usiné au tour.

5. Système (100) selon l'une des revendications précédentes, **caractérisé en ce que** la fixation entre le corps (1) et le support (2) s'effectue au moyen d'un écrou (8) .

6. Système (100) selon une ou plusieurs des revendications précédentes, **caractérisé en ce qu'**il comprend une pluralité de corps (1) associés audit support (2).

7. Système (100) selon une ou plusieurs des revendications précédentes, **caractérisé en ce que** dans lesdits trous filetés (6, 7) sont accouplés un bouchon (9) et/ou un tube de drainage (10) pour connecter les conduites hydrauliques des raccords rapides à cartouche à face plate (3) montés sur lesdits corps (1), et/ou un raccord (11) approprié pour connecter le système (100) avec d'autres zones du système à bord de la machine à laquelle lesdites conduites hydrauliques sont connectées.

8. Système (100) selon la revendication précédente, **caractérisé en ce que** ledit bouchon (9) est un bouchon fileté usiné au tour.

9. Système (100) selon la revendication 7 ou 8, **caractérisé en ce que** ledit tube de drainage (10) comprend deux adaptateurs usinés au tour et filetés (12) et le système de support (100) comprend deux corps (1), chaque adaptateur fileté étant vissé dans l'un desdits trous filetés (6, 7) pratiqués sur un corps respectif (1).

10. Système (100) selon une ou plusieurs des revendications précédentes, **caractérisé en ce que** ledit support (2) comprend une pluralité de sièges (4) configurés pour recevoir chacun un corps (1), lesdits sièges étant alignés suivant une direction de développement du support.
